# EUROPEAN PATENT APPLICATION

(11) **EP 3 699 888 A1**
(43) Date of publication of application: **26.08.2020**
(21) Application number: 20157880.4
(22) Date of filing: 18.02.2020
(51) Int. Cl.: G08G 1/16

(54) **INTERACTION METHOD AND APPARATUS BETWEEN VEHICLES**

(30) Priority: 19.02.2019 CN 201910121738
(71) Applicant: Baidu Online Network Technology (Beijing) Co., Ltd., Beijing 100085 (CN)
(72) Inventor: PAN, Yuchang, Beijing, 100085 (CN)
(74) Representative: Brevalex

(57) **Abstract**

An interaction method and apparatus between vehicles are provided according to embodiments of the application. The method includes: selecting a target vehicle from vehicles within a sensing range of a main vehicle, based on a driving strategy of the main vehicle; obtaining decision information of the main vehicle associated with status information of the target vehicle from the driving strategy of the main vehicle, according to the status information of the target vehicle; and converting the decision information of the main vehicle into prompt information and sending the prompt information to the target vehicle. According to the embodiments, decision information of a main vehicle associated with surrounding target vehicles may be sent to the target vehicles, in order to inform the target vehicles of a driving action that the main vehicle is about to make, so that the target vehicles may be prepared in advance, thereby improving driving safety between vehicles.

## Description

### TECHNICAL FIELD

The application relates to a field of communication technology, and particularly to an interaction method and apparatus between vehicles.

### BACKGROUND

In the existing technology, a vehicle traveling on a road may not be informed of a driving action that surrounding vehicles are about to make, thus, in a case where a vehicle makes a sudden driving action, such as a sudden braking, a lane changing, or a stop, a traffic accident will occur if the surrounding vehicles cannot respond immediately. For example, when a driverless vehicle is traveling on a road, the control system or vehicle hardware of the driverless vehicle suddenly fails. In this case, if the fault information cannot be notified to other surrounding vehicles in time, any subsequent abnormal driving actions of the driverless vehicle may seriously endanger the other vehicles travelling around.

The above information disclosed in the Background is merely for enhancing an understanding of the background of the present application, so it may contain information that does not form the existing technology known to those ordinary skilled in the art.

### SUMMARY

An interaction method and apparatus between vehicles are provided according to embodiments of the application, to at least solve one or more technical problems in the existing technology.

In a first aspect, an interaction method between vehicles is provided according an embodiment of the application. The method includes:
selecting a target vehicle from vehicles within a sensing range of a main vehicle, based on a driving strategy of the main vehicle;
obtaining decision information of the main vehicle associated with status information of the target vehicle from the driving strategy of the main vehicle, according to the status information of the target vehicle; and
converting the decision information of the main vehicle into prompt information and sending the prompt information to the target vehicle.

In an implementation, before the selecting a target vehicle from vehicles within a sensing range of a main vehicle, based on a driving strategy of the main vehicle, the method further includes:
obtaining a latest driving strategy generated by the main vehicle;
acquiring status information of all vehicles in a preset area within the sensing range of the main vehicle in real time.

In an implementation, the status information of the target vehicle includes at least one of a position of the target vehicle on a road, a distance between the target vehicle and the main vehicle, a speed of the target vehicle, an acceleration of the target vehicle, and an appearance characteristic of the target vehicle.

In an implementation, the converting the decision information of the main vehicle into prompt information and sending the prompt information to the target vehicle includes:
converting the decision information of the main vehicle into the prompt information recognizable by the target vehicle;
constructing a dedicated communication channel between the main vehicle and the target vehicle;
sending the prompt information recognizable by the target vehicle to the target vehicle via the dedicated communication channel.

In an implementation, the converting the decision information of the main vehicle into prompt information and sending the prompt information to the target vehicle includes:
determining a sending sequence for sending prompt information to corresponding target vehicles, according to association degrees between the decision information of the main vehicle and the corresponding target vehicles;
sending the prompt information to the corresponding target vehicles in the sending sequence.

In a second aspect, an interaction apparatus between vehicles is provided according an embodiment of the application. The apparatus includes:
a target vehicle selection module configured to select a target vehicle from vehicles within a sensing range of a main vehicle, based on a driving strategy of the main vehicle;
a decision information obtaining module configured to obtain decision information of the main vehicle associated with status information of the target vehicle from the driving strategy of the main vehicle, according to the status information of the target vehicle;
a sending module configured to convert the decision information of the main vehicle into prompt information and send the prompt information to the target vehicle.

In an implementation, the interaction apparatus further includes:
a driving strategy obtaining module configured to obtain a latest driving strategy generated by the main vehicle;
a status information acquirement module configured to acquire status information of all vehicles in a preset area within the sensing range of the main vehicle in real time.

In an implementation, the sending module includes:
a conversion sub-module configured to convert the decision information of the main vehicle into the prompt information recognizable by the target vehicle;
a channel construction sub-module configured to construct a dedicated communication channel between the main vehicle and the target vehicle;
a sending sub-module configured to send the prompt information recognizable by the target vehicle to the target vehicle via the dedicated communication channel.

In an implementation, the sending module includes:
a sequence determination sub-module configured to determine a sending sequence for sending prompt information to corresponding target vehicles, according to association degrees between the decision information of the main vehicle and the corresponding target vehicles;
a sending sub-module configured to send the prompt information to the corresponding target vehicles in the sending sequence.

In a third aspect, an interaction terminal between vehicles is provided according an embodiment of the application.

The functions of the terminal may be implemented by using hardware or by corresponding software executed by hardware. The hardware or software includes one or more modules corresponding to the functions described above.

In a possible embodiment, the interaction terminal between vehicles structurally includes a processor and a memory, wherein the memory is configured to store a program which supports the terminal for interaction between vehicles in executing the method for interaction between vehicles described in the first aspect. The processor is configured to execute the program stored in the memory. The interaction terminal between vehicles may further include a communication interface through which the terminal for interaction between vehicles communicates with other devices or communication networks.

In a fourth aspect, a computer-readable storage medium for storing computer software instructions used for an interaction terminal between vehicles is provided. The computer readable storage medium may include programs involved in executing of the interaction method between vehicles described above in the first aspect.

One of the above technical solutions has the following advantages or beneficial effects: in embodiments of the application, decision information of a main vehicle associated with surrounding target vehicles may be sent to the target vehicles, in order to inform the target vehicles of a driving action that the main vehicle is about to make, so that the target vehicles may be prepared in advance, thereby improving driving safety between vehicles.

The above summary is provided only for illustration and is not intended to be limiting in any way. In addition to the illustrative aspects, embodiments, and features described above, further aspects, embodiments, and features of the application will be readily understood from the following detailed description with reference to the accompanying drawings.

### BRIEF DESCRIPTION OF THE DRAWINGS

In the drawings, unless otherwise specified, identical or similar parts or elements are denoted by identical reference numerals throughout the drawings. The drawings are not necessarily drawn to scale. It should be understood these drawings merely illustrate some embodiments of the application and should not be construed as limiting the scope of the application.
FIG. 1 is a flowchart showing an interaction method between vehicles according to an embodiment of the application.
FIG. 2 is a schematic diagram showing driving status of a main vehicle and of a target vehicle according to an embodiment of the application.
FIG. 3 is a flowchart showing an interaction method between vehicles according to another embodiment of the application.
FIG. 4 is a specific flowchart showing S300 of an interaction method between vehicles according to an embodiment of the application.
FIG. 5 is a specific flowchart showing S300 of an interaction method between vehicles according to another embodiment of the application.
FIG. 6 is a schematic structural diagram showing an interaction apparatus between vehicles according to an embodiment of the application.
FIG. 7 is a schematic structural diagram showing an interaction apparatus between vehicles according to another embodiment of the application.
FIG. 8 is a schematic structural diagram showing a sending module of an interaction apparatus between vehicles according to an embodiment of the application.
FIG. 9 is a schematic structural diagram showing a sending module of an interaction apparatus between vehicles according to another embodiment of the application.
FIG. 10 is a schematic structural diagram showing an interaction terminal between vehicles according to an embodiment of the application.

### DETAILED DESCRIPTION OF THE EMBODIMENTS

Hereafter, only certain exemplary embodiments are briefly described. As can be appreciated by those skilled in the art, the described embodiments may be modified in different ways, without departing from the spirit or scope of the application. Accordingly, the drawings and the description should be considered as illustrative in nature instead of being restrictive.

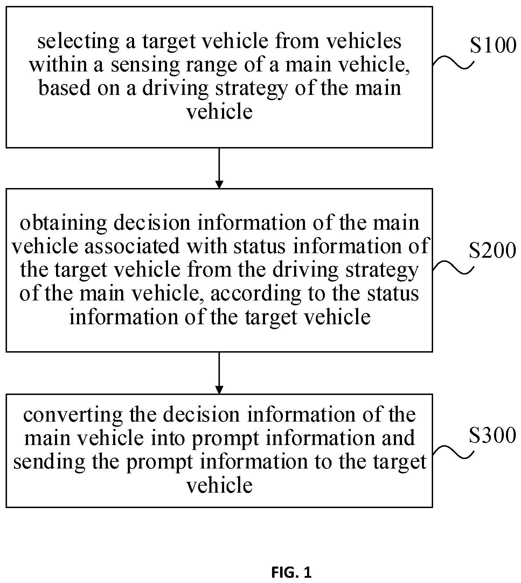

An interaction method between vehicles is provided according to an embodiment of the application. As illustrated in FIG. 1, the method includes the following steps.

At S100, a target vehicle is selected from vehicles within a sensing range of a main vehicle, based on a driving strategy of the main vehicle.

The driving strategy of the main vehicle may include a currently planned trajectory, which is to be followed by the main vehicle within a subsequent time period. The sensing range of the main vehicle may be a range which can be sensed by a sensing device of the main vehicle or may be a range which is defined based on the sensing range of the sensing device. A specific sensing range may be selected according to specific needs. The target vehicle may be a vehicle with which the main vehicle is about to interact. The sensing device may include various devices provided on the body of the main vehicle, which are capable of sensing objects in ambient environment, such as a radar, or a camera.

At S200, decision information of the main vehicle associated with status information of the target vehicle is obtained from the driving strategy of the main vehicle, according to the status information of the target vehicle.

Status information of a target vehicle may include status information of the target vehicle in a driving process. For example, the status information may include information of a specific driving operation performed by the target vehicle, such as moving forward or backward, accelerating, decelerating, lane changing, or turning, and may also include specific parameters such as speed, acceleration, or steering wheel angle. The status information may also include a position of the target vehicle on a road, a distance between the target vehicle and the main vehicle, a speed of the target vehicle, an acceleration of the target vehicle, appearance characteristics of the target vehicle, and the like. According to the status information, decision information of the main vehicle associated with the target vehicle is obtained from the driving strategy. The decision information may include information of a driving action that the main vehicle is about to make at a certain time. The decision information of the main vehicle associated with status information of the target vehicle may include decision information which may affect the target vehicle.

In an application example, if the status information of the target vehicle refers to a current position of the target vehicle on a road, it is needed to find out, from several decision information, whether a driving action of the main vehicle will lead to approach or reach the current position of the target vehicle, when the main vehicle makes the driving action according to a decision information. If it is determined that the main vehicle will approach or reach the current position of the target vehicle, the corresponding decision information may be determined as the decision information of the main vehicle associated with status information of the target vehicle.

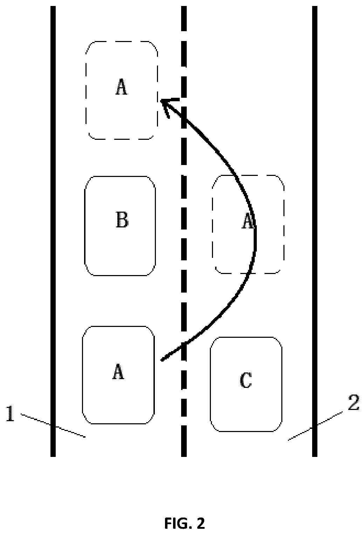

In another application example, for example, as illustrated in FIG. 2, according to a current driving strategy of the main vehicle A, the main vehicle A is about to perform an overtaking operation, that is, the main vehicle A is about to overtake the target vehicle B and then return to the current lane 1 to continue driving. The driving strategy of the main vehicle A may include first decision information of "changing to the right lane 2" and second decision information of "overtaking the target vehicle B and then changing to the left lane 1". When the main vehicle A changes to the right lane 2, the target vehicle C may adjust its current driving status to a deceleration status, in order to avoid a collision with the main vehicle A. In this case, it may be determined that the first decision information is associated with the target vehicle C. When the main vehicle A accelerates to overtake the target vehicle B, the driving status of the target vehicle C behind the main vehicle A will not be affected substantially. In this case, it may be determined that the second decision information is not associated with the target vehicle C. When the main vehicle A changes to the right lane 2, the target vehicle B in front of the main vehicle A will not be affected substantially. In this case, it may be determined that the first decision information is not associated with the target vehicle B. Further, when the main vehicle A accelerates to overtake the target vehicle B and changes to the left lane 1, the target vehicle B may adjust its current driving status to a deceleration status, in order to avoid a collision with the main vehicle A. In this case, it may be determined that the second decision information is associated with the target vehicle B.

At S300, the decision information of the main vehicle is converted into prompt information and the prompt information is sent to the target vehicle. In this way, the target vehicle may be informed of a driving action that the main vehicle is about to make and may affect the driving state of the target vehicle.

The decision information of the main vehicle is used to inform the main vehicle itself of a driving action which is to be made by the main vehicle at a certain time. Thus, it is necessary to convert the decision information of the main vehicle into prompt information recognizable by the target vehicle, that is, a driving action to be performed by the main vehicle with respect to the target vehicle.

For example, as illustrated in FIG. 2, the decision information of the main vehicle A associated with the target vehicle C is changing to the right lane 2, and the converted prompt information is that "the main vehicle A will approach you and wants to overtake you (the target vehicle C)".

In an implementation, the decision information of the main vehicle and the vehicles within a sensing range capable to be sensed by a main vehicle may change at any time. In order to send the prompt information to the target vehicles around the main vehicle more quickly and accurately, the main vehicle may send corresponding prompt information to respective target vehicles associated with the subsequent decision information, based on a timing rule. For a target vehicle associated with decision information to be performed by the main vehicle after a long time period, corresponding prompt information may not be sent to the target vehicle immediately.

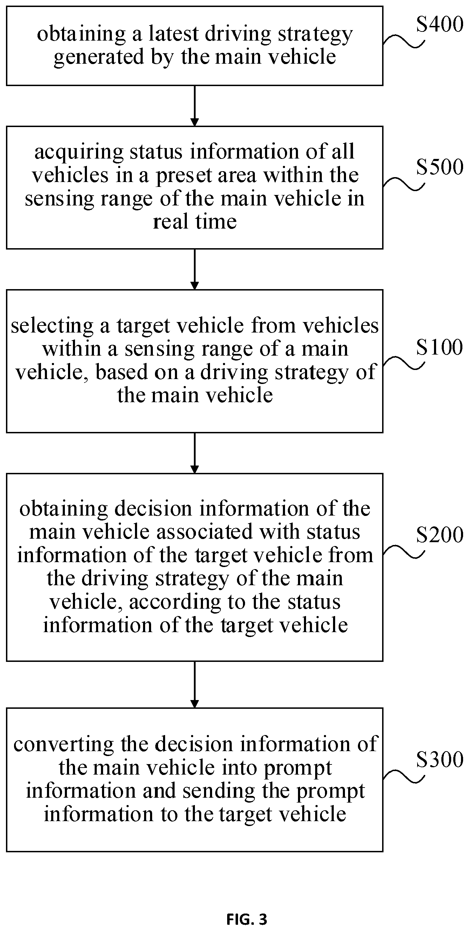

In an implementation, as illustrated in FIG. 3, before the selecting a target vehicle from vehicles within a sensing range of a main vehicle, based on a driving strategy of the main vehicle, the method further includes the following steps.

At S400, a latest driving strategy generated by the main vehicle is obtained.

At S500, status information of all vehicles in a preset area within the sensing range of the main vehicle is acquired in real time. The status of surrounding vehicle on a road, on which the main vehicle is located, may change in real time, and the surrounding vehicle may also change in real time. In order to send the prompt information to the target vehicles more quickly and accurately, it is necessary to obtain the latest driving strategy of the main vehicle and status information of all vehicles in real time.

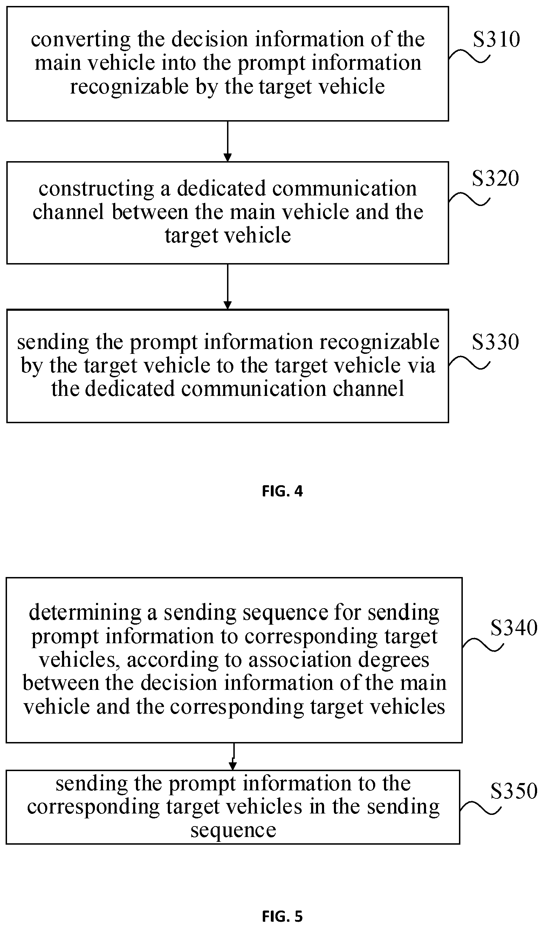

In an implementation, as illustrated in FIG. 4, the converting the decision information of the main vehicle into prompt information and sending the prompt information to the target vehicle includes the following steps.

At S310, the decision information of the main vehicle is converted into the prompt information recognizable by the target vehicle. That is, the driving strategy of the main vehicle, which is used to inform the main vehicle itself of a driving action to be made by the main vehicle at a certain time, is converted into prompt information, which is used to inform the target vehicle of the driving action to be made by the main vehicle with respect to the target vehicle.

At S320, a dedicated communication channel between the main vehicle and the target vehicle is constructed. The decision information of the main vehicle may be associated with a plurality of target vehicles, and the prompt information corresponding to the decision information, which is to be sent to respective target vehicles, may be different. In order to avoid erroneously sending the prompt information to a wrong target vehicle, a dedicated communication channel between the main vehicle and the respective target vehicles may be constructed, to achieve channel isolations between the respective target vehicles.

At S330, the prompt information recognizable by the target vehicle is sent to the target vehicle via the dedicated communication channel.

In an implementation, the target vehicle may include a human-driven vehicle and/or a driverless vehicle. The target vehicle receives prompt information from a sending device provided in the main vehicle through a receiving device in the target vehicle. It should be noted that if the target vehicle is an intelligent vehicle, the intelligent vehicle is usually equipped with a receiving device. In this case, a communication connection with the intelligent vehicle may be established directly, to send prompt information. If the target vehicle is a human-driven vehicle, a device with a receiving function may be separately mounted thereon to realize a communication connection with the main vehicle. It is also possible to establish a connection with other communication devices on the human-driven vehicle, to send the prompt information to the human-driven vehicle, so that a human driver may know the driving strategy of the main vehicle.

In an implementation, as illustrated in FIG. 5, the converting the decision information of the main vehicle into prompt information and sending the prompt information to the target vehicle includes the following steps.

At S340, a sending sequence for sending prompt information to corresponding target vehicles is determined, according to association degrees between the decision information of the main vehicle and the corresponding target vehicles.

It should be noted that the association degree may represent an importance of the prompt information converted from decision information with respect to the target vehicle. For example, based on current decision information, a main vehicle may predict that a collision with a vehicle on its side would occur. In this case, the importance of sending prompt information to the vehicle on its side is higher, while the importance of sending prompt information to a vehicle in front of the main vehicle is lower. Thus, a sending sequence may be determined as sending prompt information to the vehicle on its side first and then sending prompt information to the vehicle in front of the main vehicle.

At S350, the prompt information is sent to the corresponding target vehicles in the sending sequence.

In an implementation, an information level of prompt information sent to the corresponding target vehicle is set according to association degrees between the decision information of the main vehicle and the target vehicles. If the information level is high, it indicates that the prompt information may have a strong influence on the driving status of the target vehicle. If the information level is low, it indicates that the prompt information may have a weak influence on the driving status of the target vehicle. In order to prevent the target vehicle from frequently receiving prompt information which may only have a weak influence on the driving status of the target vehicle, the receiving device of the target vehicle may be set with a level limitation of prompt information to be received. That is, prompt information with an information level lower than the set level limitation may be filtered out by the receiving device of the target vehicle. Prompt information with an information level higher than the set level limitation may be processed by the target vehicle and communicated to the target vehicle or a driver therein by means of a text or a voice.

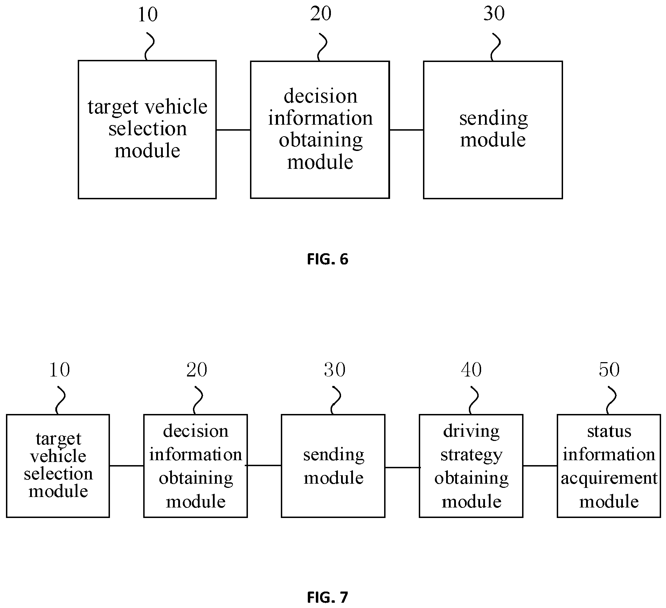

An interaction apparatus between vehicles is provided according to an embodiment of the application. As illustrated in FIG. 6, the apparatus includes:
a target vehicle selection module 10 configured to select a target vehicle from vehicles within a sensing range of a main vehicle, based on a driving strategy of the main vehicle;
a decision information obtaining module 20 configured to obtain decision information of the main vehicle associated with status information of the target vehicle from the driving strategy of the main vehicle, according to the status information of the target vehicle;
a sending module 30 configured to convert the decision information of the main vehicle into prompt information and send the prompt information to the target vehicle.

In an implementation, as illustrated in FIG. 7, the interaction apparatus between vehicles further includes:
a driving strategy obtaining module 40 configured to obtain a latest driving strategy generated by the main vehicle;
a status information acquirement module 50 configured to acquire status information of all vehicles in a preset area within the sensing range of the main vehicle in real time.

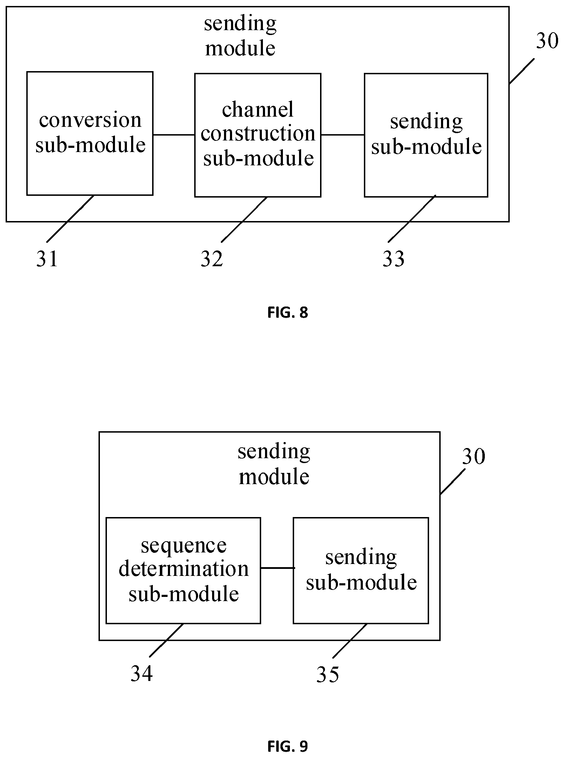

In an implementation, as illustrated in FIG. 8, the sending module 30 includes:
a conversion sub-module 31 configured to convert the decision information of the main vehicle into the prompt information recognizable by the target vehicle;
a channel construction sub-module 32 configured to construct a dedicated communication channel between the main vehicle and the target vehicle;
a sending sub-module 33 configured to send the prompt information recognizable by the target vehicle to the target vehicle via the dedicated communication channel.

In an implementation, as illustrated in FIG. 9, the sending module 30 includes:
a sequence determination sub-module 34 configured to determine a sending sequence for sending prompt information to corresponding target vehicles, according to association degrees between the decision information of the main vehicle and the corresponding target vehicles; and
a sending sub-module 35 configured to send the prompt information to the corresponding target vehicles in the sending sequence.

An interaction terminal between vehicles is provided according to an embodiment of the application.

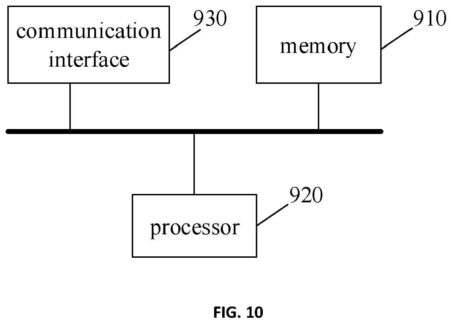

As illustrated in FIG. 10, the terminal includes a memory 910 and a processor 920, wherein a computer program that can run on the processor 920 is stored in the memory 910. The processor 920 executes the computer program to implement the method for interaction between vehicles according to the foregoing embodiments. The number of either the memory 910 or the processor 920 may be one or more.

The terminal further includes a communication interface 930 configured to enable the memory 910 and the processor 920 to communicate with an external device and exchange data.

The memory 910 may include a high-speed RAM memory and may also include a non-volatile memory, such as at least one magnetic disk memory.

If the memory 910, the processor 920, and the communication interface 930 are implemented independently, the memory 910, the processor 920, and the communication interface 930 may be connected to each other via a bus to realize mutual communication. The bus may be an Industry Standard Architecture (ISA) bus, a Peripheral Component Interconnected (PCI) bus, an Extended Industry Standard Architecture (EISA) bus, or the like. The bus may be categorized into an address bus, a data bus, a control bus, and the like. For ease of illustration, only one bold line is shown in FIG. 10 to represent the bus, but it does not mean that there is only one bus or one type of bus.

Optionally, in a specific implementation, if the memory 910, the processor 920 and the communication interface 930 are integrated on one chip, the memory 910, the processor 920 and the communication interface 930 may implement mutual communication through an internal interface.

In yet another aspect, according to an embodiment of the application, it is provided a computer-readable storage medium having computer programs stored thereon. When executed by a processor, the programs implement the method for interaction between vehicles according to above embodiment.

In the description of the specification, the description of the terms "one embodiment," "some embodiments," "an example," "a specific example," or "some examples" and the like means the specific features, structures, materials, or characteristics described in connection with the embodiment or example are included in at least one embodiment or example of the present application. Furthermore, the specific features, structures, materials, or characteristics described may be combined in any suitable manner in any one or more of the embodiments or examples. In addition, different embodiments or examples described in this specification and features of different embodiments or examples may be incorporated and combined by those skilled in the art without mutual contradiction.

In addition, the terms "first" and "second" are used for descriptive purposes only and are not to be construed as indicating or implying relative importance or implicitly indicating the number of indicated technical features. Thus, features defining "first" and "second" may explicitly or implicitly include at least one of the features. In the description of the present application, "a plurality of" means two or more, unless expressly limited otherwise.

Any process or method descriptions described in flowcharts or otherwise herein may be understood as representing modules, segments or portions of code that include one or more executable instructions for implementing the steps of a particular logic function or process. The scope of the preferred embodiments of the present application includes additional implementations where the functions may not be performed in the order shown or discussed, including according to the functions involved, in substantially simultaneous or in reverse order, which should be understood by those skilled in the art to which the embodiment of the present application belongs.

Logic and/or steps, which are represented in the flowcharts or otherwise described herein, for example, may be thought of as a sequencing listing of executable instructions for implementing logic functions, which may be embodied in any computer-readable medium, for use by or in connection with an instruction execution system, device, or apparatus (such as a computer-based system, a processor-included system, or other system that fetch instructions from an instruction execution system, device, or apparatus and execute the instructions). For the purposes of this specification, a "computer-readable medium" may be any device that may contain, store, communicate, propagate, or transport the program for use by or in connection with the instruction execution system, device, or apparatus. More specific examples (not a non-exhaustive list) of the computer-readable media include the following: electrical connections (electronic devices) having one or more wires, a portable computer disk cartridge (magnetic device), random access memory (RAM), read only memory (ROM), erasable programmable read only memory (EPROM or flash memory), optical fiber devices, and portable read only memory (CDROM). In addition, the computer-readable medium may even be paper or other suitable medium upon which the program may be printed, as it may be read, for example, by optical scanning of the paper or other medium, followed by editing, interpretation or, where appropriate, process otherwise to electronically obtain the program, which is then stored in a computer memory.

It should be understood various portions of the present application may be implemented by hardware, software, firmware, or a combination thereof. In the above embodiments, multiple steps or methods may be implemented in software or firmware stored in memory and executed by a suitable instruction execution system. For example, if implemented in hardware, as in another embodiment, they may be implemented using any one or a combination of the following techniques well known in the art: discrete logic circuits having a logic gate circuit for implementing logic functions on data signals, application specific integrated circuits with suitable combinational logic gate circuits, programmable gate arrays (PGAs), field programmable gate arrays (FPGAs), and the like.

Those skilled in the art may understand that all or some of the steps carried in the methods in the foregoing embodiments may be implemented by a program instructing relevant hardware. The program may be stored in a computer-readable storage medium, and when executed, one of the steps of the method embodiment or a combination thereof is included.

In addition, each of the functional units in the embodiments of the present application may be integrated in one processing module, or each of the units may exist alone physically, or two or more units may be integrated in one module. The above-mentioned integrated module may be implemented in the form of hardware or in the form of software functional module. When the integrated module is implemented in the form of a software functional module and is sold or used as an independent product, the integrated module may also be stored in a computer-readable storage medium. The storage medium may be a read only memory, a magnetic disk, an optical disk, or the like.

The foregoing descriptions are merely specific embodiments of the present application, but not intended to limit the protection scope of the present application. Those skilled in the art may easily conceive of various changes or modifications within the technical scope disclosed herein, all these should be covered within the protection scope of the present application. Therefore, the protection scope of the present application should be subject to the protection scope of the claims.

## Claims

1. An interaction method between vehicles, comprising:
selecting (S100) a target vehicle from vehicles within a sensing range of a main vehicle, based on a driving strategy of the main vehicle;
obtaining (S200) decision information of the main vehicle associated with status information of the target vehicle from the driving strategy of the main vehicle, according to the status information of the target vehicle; and
converting (S300) the decision information of the main vehicle into prompt information and sending the prompt information to the target vehicle.

2. The interaction method according to claim 1, wherein before the selecting a target vehicle from vehicles within a sensing range of a main vehicle, based on a driving strategy of the main vehicle, the method further comprises:
obtaining (S400) a latest driving strategy generated by the main vehicle; and
acquiring (S500) status information of all vehicles in a preset area within the sensing range of the main vehicle in real time.

3. The interaction method according to claim 1, wherein the status information of the target vehicle comprises at least one of a position of the target vehicle on a road, a distance between the target vehicle and the main vehicle, a speed of the target vehicle, an acceleration of the target vehicle, and an appearance characteristic of the target vehicle.

4. The interaction method according to claim 1, wherein the converting the decision information of the main vehicle into prompt information and sending the prompt information to the target vehicle comprises:
converting (S310) the decision information of the main vehicle into the prompt information recognizable by the target vehicle;
constructing (S320) a dedicated communication channel between the main vehicle and the target vehicle; and
sending (S330) the prompt information recognizable by the target vehicle to the target vehicle via the dedicated communication channel.

5. The interaction method according to claim 1, wherein the converting the decision information of the main vehicle into prompt information and sending the prompt information to the target vehicle comprises:
determining (S340) a sending sequence for sending prompt information to corresponding target vehicles, according to association degrees between the decision information of the main vehicle and the corresponding target vehicles; and
sending (S350) the prompt information to the corresponding target vehicles in the sending sequence.

6. An interaction apparatus between vehicles, comprising:
a target vehicle selection module (10) configured to select a target vehicle from vehicles within a sensing range of a main vehicle, based on a driving strategy of the main vehicle;
a decision information obtaining module (20) configured to obtain decision information of the main vehicle associated with status information of the target vehicle from the driving strategy of the main vehicle, according to the status information of the target vehicle; and
a sending module (30) configured to convert the decision information of the main vehicle into prompt information and send the prompt information to the target vehicle.

7. The interaction apparatus according to claim 6, further comprising:
a driving strategy obtaining module (40) configured to obtain a latest driving strategy generated by the main vehicle; and
a status information acquirement module (50) configured to acquire status information of all vehicles in a preset area within the sensing range of the main vehicle in real time.

8. The interaction apparatus according to claim 6, wherein the status information of the target vehicle comprises at least one of a position of the target vehicle on a road, a distance between the target vehicle and the main vehicle, a speed of the target vehicle, an acceleration of the target vehicle, and an appearance characteristic of the target vehicle.

9. The interaction apparatus according to claim 6, wherein the sending module (30) comprising:
a conversion sub-module (31) configured to convert the decision information of the main vehicle into the prompt information recognizable by the target vehicle;
a channel construction sub-module (32) configured to construct a dedicated communication channel between the main vehicle and the target vehicle; and
a sending sub-module (33) configured to send the prompt information recognizable by the target vehicle to the target vehicle via the dedicated communication channel.

10. The interaction apparatus according to claim 6, wherein the sending module (30) comprising:
a sequence determination sub-module (34) configured to determine a sending sequence for sending prompt information to corresponding target vehicles, according to association degrees between the decision information of the main vehicle and the corresponding target vehicles; and
a sending sub-module (35) configured to send the prompt information to the corresponding target vehicles in the sending sequence.

11. An interaction terminal between vehicles, comprising:
one or more processors (920); and
a storage device configured to store one or more programs, wherein
the one or more programs, when executed by the one or more processors (920), cause the one or more processors (920) to implement the method according to any one of claims 1 to 5.

12. A computer-readable storage medium comprising computer executable instructions stored thereon, wherein the executable instructions, when executed by a processor (920), cause the processor (920) to implement the method according to any one of claims 1 to 5.

13. A computer program product comprising computer executable instructions stored thereon, wherein the executable instructions, when executed by a processor (920), cause the processor (920) to implement the method according to any one of claims 1 to 5.
